# EUROPEAN PATENT SPECIFICATION

(11) **EP 1 724 707 B1**
(45) Date of publication and mention of the grant of the patent: **09.03.2011**
(21) Application number: 05254587.8
(22) Date of filing: 22.07.2005
(51) Int. Cl.: G06K 19/07, G06K 7/00, G11B 20/00, G06F 21/00, H01Q 1/22

(54) **Radio frequency identification (rfid) system**
RFID-Funk-Identifizierungssystem
Système d'identification de radiofréquence (RFID)

(30) Priority: 19.05.2005 US 683464 P; 16.06.2005 US 156326
(43) Date of publication of application: 22.11.2006
(73) Proprietor: CHUNG NAM ELECTRONICS CO., LTD., Hong Kong (CN)
(72) Inventor: Lai, Kin Yue Albert, Hong Kong (CN); Wong, On Yung Timmy, Hong Kong (CN); Wan, Take Ki Peter, Hong Kong (CN); Wong, Hon Fai Eric, Hong Kong (CN); Tsang, Ngai Ming, Hong Kong (CN); Ma, Pak Yip Tony, Hong Kong (CN); Ko, Ping Man Jeff, Hong Kong (CN); Cheung, Chi Chiu David, Hong Kong (CN)
(74) Representative: Carpmael, Robert Maurice Charles

(56) References cited:
- EP-A- 0 810 540
- EP-A2- 0 849 734
- WO-A-99/38162
- FR-A- 2 790 346
- US-A- 5 694 514
- US-A- 5 862 117
- US-B1- 6 381 418

## Description

### Background of the Invention

Radio Frequency Identification (RFID) is a technology similar to barcodes for unique identification of an item, yet using wireless technology so that there is no need to optically line-of sight observe the barcode, is now in initial widespread adoption throughout the world. There are a number of US patents touching on such technology, including US 4,075,632, US 4,739,328, US 5,030,807, US 5,777,561, US 5,828,693, US 5,850,181, US 5,912,632, US 5,995,019, US 6,154,136, US 6,288,629, US 6,400,274 and US 6,429,775.

EP 0 849 734 A2 discloses attaching or embedding a "TIRIS" transponder (or other RF or IR or barcode or other identifying device) physically into the center of the proposed DVD disk. Once a disk is input to a media player, the interrogation portion of the media player transmits an interrogation signal to the transponder located on the disk. Once empowered with the interrogation signal, the transponder accesses the predetermined address, code word, encryption algorithms, media type information, and copyright information from its memory. Then the transponder transmits the address, the code word, encryption algorithms, media type information and copyright information to the interrogator, located within the media player, and the interrogator sends the transponder data stream to a conditional access management processor (CAMP). Simultaneously with the processing action of the CAMP, the interrogator instructs the player to access the data_word at the predetermined address on the disk and the player accesses the data_word on the disk. The media player only plays if there is a match between the read data_word and received code word and the received algorithm correctly decrypts the content of the media prior to decoding.

US 5,862,117 discloses a compact disk comprising a data storage medium for optical reading situated in an annular region, which defines a central region wherein is arranged an electronic module, formed of an electronic unit, in particular an integrated circuit, and an antenna formed by a winding, made of an electrically conductive material. The electronic module allows contactless electromagnetic coupling with an electromagnetic wave transmitter-receiver able to communicate with said electronic unit. In particular, this electronic unit comprises an identification code and/or a decoding key for the data contained in said storage medium.

WO 99/38162 discloses a secure recording medium having at least one of audio, video and software content, comprising a plurality of media recording disks (DVDs) with a disk security chip embedded in each of the DVDs, and each disk chip comprises a security key, and at least two of the DVDs have different disk security keys. The claims are delimited against this document.

US Patent No. 6,381,418 discloses a print having information associated with the print stored in a memory coupled to the print. A print, processed by an image processing apparatus, having an attached memory for storing detailed information about the print and allowing contactless access using an electromagnetic frequency signal. A transceiver, connected to a control logic device, communicates with a transponder that is attached to the print substrate and is integrally coupled to the memory. The transponder is capable of receiving a first electromagnetic field (frequency) from the transceiver and deriving power and address information from the first frequency, then generates a second electromagnetic field (frequency) in response, where the second electromagnetic field is characteristic of the data stored in the memory.

There are however many hurdles to wider use of the technology. The difficulty of application of RFID to different environment and business processes pose a great challenge to the system integrators in the world. The fact that RFID reading operation requires the combined interdisciplinary knowledge of RF circuits, antennas, propagation, scattering, system, middleware, server software, and business process engineering is so overwhelming that it is hard to find one single system integrator knowledgeable about them all. Users are then forced to contract multiple companies to build the RFID infrastructure, and the inevitable difficulty in communication between companies slow down the deployment rate.

In view of the aforesaid situation, this present invention seeks to create and introduce novel technologies, namely redundant networked multimedia technology, auto-ranging technology, auto-planning technology, smart active antenna technology, plus novel RFID tag technology, to consolidate the knowledge of all these different disciplines into a comprehensive product family. An expert system like installation, monitoring and maintenance infrastructure thus link up all these technologies. The ultimate goal is to advance the state-of-the-art in RFID system and increase the ease of deployment, speed of deployment, and reliability of deployment of RFID system throughout the world.

The applications of these RFID technologies include, but are not limited to, logistics, warehouse management, parking lot management, golf ball tracking, clothing and fashion industry, factory automation, produce tracking, baggage tracking, document management, human access control and tracking, etc. Actually, the fact that these technologies arise from these actual applications can probably be intuitively guessed from the description of the patent application.

### Summary of the invention

The invention is defined by the independent claims.

Preferred embodiments are set out in the dependent claims.

### Brief Description of the Drawings

Preferred embodiments of the present invention will now be described, by way of examples only, with reference to the accompanying drawings, in which:
Figure 1 shows a schematic diagram of part of a redundant networked multimedia RFID system according to the present invention;
Figure 2 shows in more detail the redundant networked multimedia RFID system of Figure 1;
Figure 3 shows a further part of the redundant networked multimedia RFID system of Figure 1;
Figure 4 shows a boot-up panel of the redundant networked multimedia RFID system shown in Figures 1 to 3;
Figure 5 shows an exemplary operation panel of the redundant networked multimedia RFID system shown in Figures 1 to 3; and
Figures 6 to 10 are various schematic diagrams of the redundant networked multimedia RFID system shown in Figures 1 to 3, showing various functions which can be carried out by this system.

### Detailed Description of the Preferred Embodiments

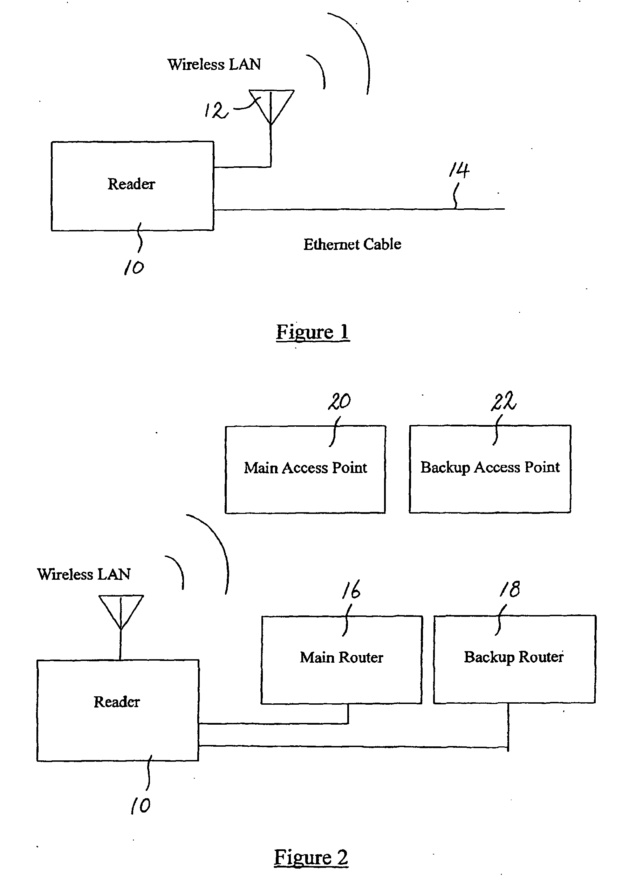

A redundant networked multimedia RFID system according to the present invention entails the use of wireless LAN (Wi Fi) connection and Ethernet connection simultaneously for redundant network connectivity, as shown in Figure 1. An RFID reader 10 in such a system is connected with the wireless LAN *via* an antenna 12 for emitting radio frequency (RF) signals to the outside environment, and is also connected with the remaining system *via* an Ethernet cable 14, thus providing redundant physical layer.

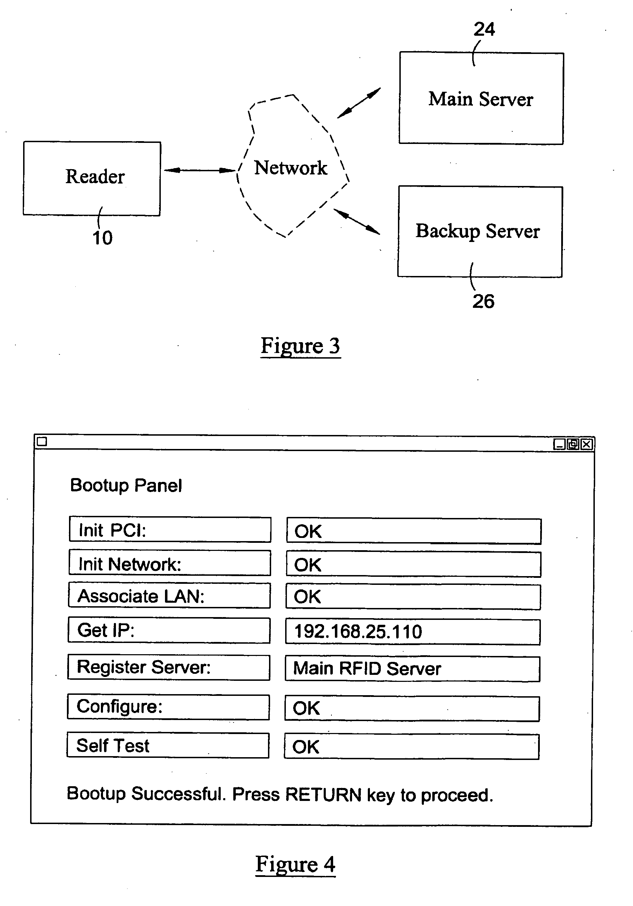

As shown in Figure 2, the system is configured to automatically hunt for main router 16, backup router 18, main access point 20, and backup access point 22 for gateway redundancy. As shown in Figure 3, the system is also configured such that the RFID reader 10 automatically hunts for main server 24 and backup server 26 for backend redundancy. Even if both servers 24, 26 cannot be found, the system will record data on internal non-volatile memory until a server comes up. In particular, the name (IP address) of the respective routers 16, 18, access points 20, 22 and gateways are pre-loaded into the reader 10. When there is a network unreachable situation, the reader 10 will try out the alternative router, access point, and gateway names (IP addresses) to try to re-connect *via* them. Similarly, the name (IP address) of the respective server 24, 26 are also pre-loaded into the reader 10. When the server cannot be reached, the reader 10 will automatically hunt for the other server by sending query messages directed to the server.

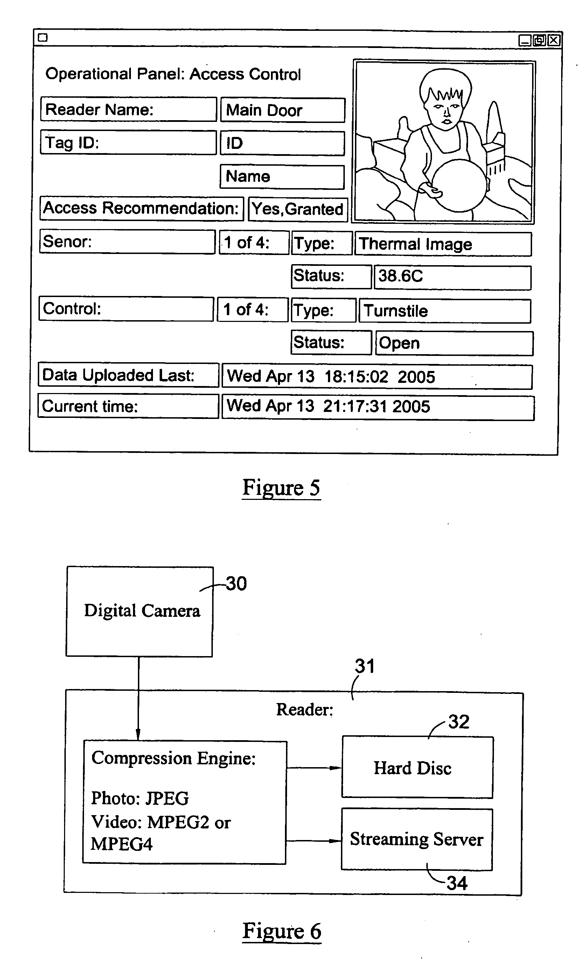

The system provides output of video or graphic/image data. Such enables boot-up time user friendliness, as in the case of the boot-up panel as shown in Figure 4. After reading RFID tags, one or more pictures of the product pre-loaded in the database are immediately downloaded from the database for visual verification by logistics handler or security guard or customer officer at the reader site, as in the exemplary operation panel shown in Figure 5.

The system also provides input of video or graphic/image data. This enables capture and recording of product look for future reference, verification or litigation. As shown in Figure 6, a digital camera 30 captures images of a product in either image file format (e.g. JPEG) or video file format (e.g. MPEG2 or MPEG4) for storage in a database of a hard disk 32 of an RFID reader 31, and/or for subsequent output *via* a streaming server 34.

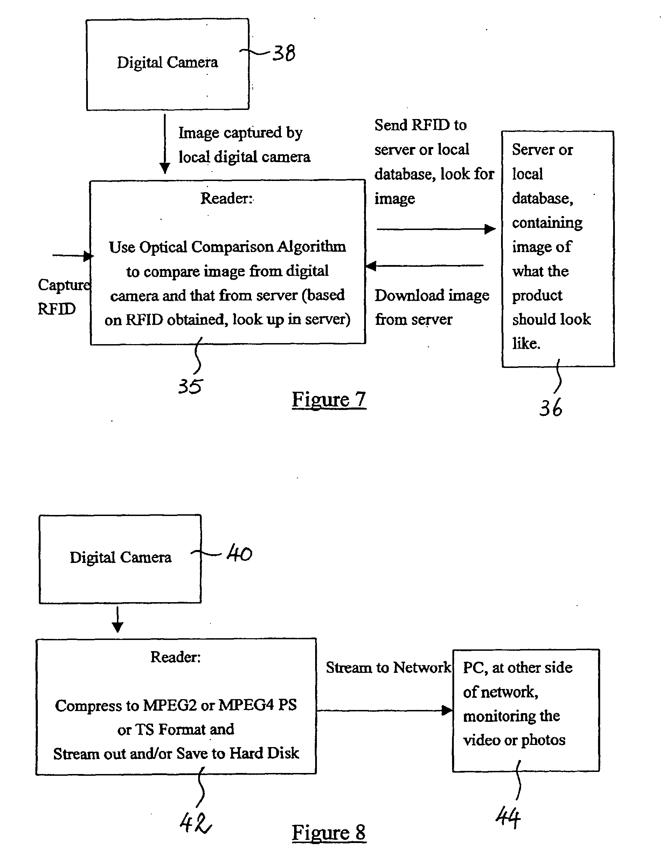

For products with pre-downloaded images or videos, real time image comparison may be carried out to verify product is indeed what is being applied for transit. As shown in Figure 7, an RFID reader 35 first captures RFID data from an RFID tag. The RFID data are then sent to a server or a local database 36 for identification of corresponding images. The corresponding image data or video data are then downloaded from the server 36 back to the RFID reader 35. Images captured by a local digital camera 38 are fed to the reader 35 for comparison with the image data or video data downloaded from the server 36 back to the RFID reader 35, using an image comparison algorithm.

Such a system also allows for real time video streaming to the network for continuous monitoring, as shown in Figure 8. A local digital camera 40 continuously captures video images of, say, a product and have such data fed to an RFID reader 42. The data are then compressed by the RFID reader 42 to MPEG2, MPEG4 PS or TS format for streaming out and/or storage in the hard disk of the RFID reader 42. In particular, such compressed data may be streamed out *via* a network to a personal computer 44 at another end of the network, enabling the video or photos to be monitored.

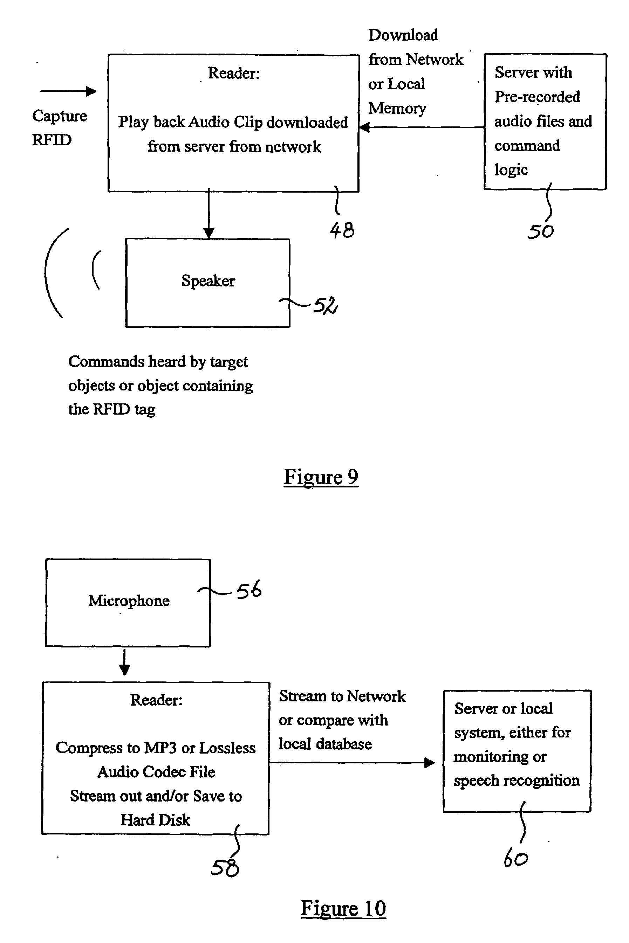

The system also provides output of audio signals, e.g. for providing audio cues for installation, boot-up help and guidance. In addition, such audio signals may provide audio commands during operation, with the audio signals pre-recorded and the logic defined by user. As shown in Figure 9, an RFID reader 48, upon reception of RFID data form an RFID tag, can download, either from a local memory, or *via* a network from a server 50, pre-recorded audio files and command logic. The downloaded audio clips are then played back and outputted *via* a speaker 52. Such pre-recorded audio clips may contain commands or instructions to be heard by target objects or object containing the RFID tag.

In addition, the system also provides input of audio signals, enabling capture of site audio information and signature. Furthermore, such allows interaction *via* the network for speech recognition. Operation of the system based on interactive security password on the basis of audio data is thus also possible. As shown in Figure 10, a local microphone 56 is provided for reception of sound, e.g. from an individual carrying an RFID tag, and whose identity is to be ascertained. The individual speaks or makes certain sound into the microphone 56. The received signals are then fed to an RFID reader 58, and compressed to MP3 format or Lossless Audio Codec file, to be streamed out and/or stored in a hard disk of the RFID reader 58. The RFID reader 58 also receives RF signals from the RFID tag worn by the individual. The compressed audio data are then compared with pre-stored compressed audio data of that individual as stored in a server 60 or the hard disk of the RFID reader 58 for monitoring or speech recognition, e.g. for identification of the individual for security purpose.

It should also be understood that certain features of the invention, which are, for clarity, described in the context of separate embodiments, may also be provided in combination in a single embodiment. Conversely, various features of the invention which are, for brevity, described in the context of a single embodiment, may also be provided or separately or in any suitable subcombination.

## Claims

1. An RFID reader (10, 31, 35, 42, 48, 58) adapted to receive data from at least one RFID tag, wherein said RFID reader is adapted to receive and/or transmit video/image and/or audio data, said RFID reader including:
means for capturing data from at least one RFID tag;
**characterized by**
means for transmitting said data captured from said at least one RFID tag to a server or database (36, 50) for identification of at least one video/image file in said server or database;
means for receiving data of said at least one video/image file in said server or database;
means for receiving video/image data from a digital camera (30, 38, 40); and '
means for comparing said data of said at least one video/image file in said server or database with said video/image data received from said digital camera.

2. An RFID reader according to Claim 1, wherein said RFID reader is adapted to receive audio signals from a microphone (56).

3. An RFID reader according to Claim 1, wherein said RFID reader is adapted to transmit audio signals *via* a speaker (52).

4. An RFID reader according to Claim 1, wherein said RFID reader further includes means for compressing said video/image and/or audio data received from said digital camera.

5. An RFID reader according to Claim 1, wherein said comparison is carried out by using an image comparison algorithm.

6. An RFID system including an RFID reader (10, 31, 35, 42, 48, 58) according to Claim 1, and at least a server or database (36, 50) containing data of said at least one video/image and/or audio file receivable by said RFID reader.

7. An RFID system according to Claim 6, further including at least a digital camera (30, 38, 40) adapted to transmit video/image signals to said RFID reader.

8. An RFID system according to Claim 6, further including at least a speaker (52) adapted to output audio signals from said RFID reader.

9. An RFID system according to Claim 6, further including at least a microphone (56) adapted to transmit audio signals to said RFID reader.

10. An RFID system according to Claim 6, wherein said RFID reader is connected with the rest of the system both wirelessly and with at least one wire.

11. An RFID system according to Claim 6, wherein said RFID reader is adapted to be connected with a plurality of access points (20, 22).

12. An RFID system according to Claim 6, wherein said RFID reader is adapted to be connected with a plurality of routers (16,18).

13. An RFID system according to Claim 6, wherein said RFID reader is adapted to be connected with a plurality of servers (24, 26, 36, 50, 60).

14. A method of operating an RFID system including at least an RFID reader (10, 31, 35, 42, 48, 58) as defined by claim 1,
said method including the steps of
(a) capturing data of at least one RFID tag;
(b) capturing video/image and/or audio data of an object carrying said at least one RFID tag;
**characterized in** further including steps of:
(c) sending said data captured from said at least one RFID tag to a database (36, 50);
(d) obtaining from said database pre-stored video/image and/or audio data of said object carrying said at least one RFID tag; and
(e) comparing video/image and/or audio data of said object captured in said step (b) with said data obtained from said database in said step (d).

15. A method according to Claim 14, wherein said step (b) is carried out by at least a digital camera (30, 38, 40).

16. A method according to Claim 14, wherein said step (b) is carried out by a microphone (56).

17. A method according to Claim 14, further including a step (f) of outputting said audio data obtained from said database in step (d).

18. A method according to Claim 17, wherein said audio data are outputted by at least one speaker (52).

19. A method according to Claim 14, further including a step (g) of transmitting said video/image and/or audio data of said object captured in said step (b) to a personal monitor (44).

## Patentansprüche

1. RFID-Leser (10, 31, 35, 42, 48, 58), der angepasst ist, um Daten von mindestens einem RFID-Tag zu empfangen, wobei der RFID-Leser angepasst ist, um Video-Bild-und/oder Audiodaten zu empfangen und/oder zu übertragen, der RFID-Leser enthaltend:
Mittel zum Erfassen von Daten von mindestens einem RFID-Tag;
**gekennzeichnet durch**
Mittel zum Übertragen der Daten, die von mindestens einem RFID-Tag erfasst wurden, an einen Server oder eine Datenbank (36, 50) zum Identifizieren mindestens einer Video-Bilddatei in dem Server oder der Datenbank;
Mittel zum Empfangen von Daten von der mindestens einen Video-/Bilddatei in dem Server oder der Datenbank;
Mittel zum Empfangen von Video-Bilddaten von einer Digitalkamera (30,38, 40); und
Mittel zum Vergleichen der Daten der mindestens einen Video-Bilddatei in dem Server oder der Datenbank mit den Video-Bilddaten, die von der Digitalkamera empfangen wurden.

2. RFID-Leser nach Anspruch 1, wobei der RFID-Leser angepasst ist, um Audiosignale von einem Mikrofon (56) zu empfangen.

3. RFID-Leser nach Anspruch 1, wobei der RFID-Leser angepasst ist, um Audiosignale über einen Lautsprecher (52) zu übertragen.

4. RFID-Leser nach Anspruch 1, wobei der RFID-Leser weiterhin Mittel zum Komprimieren der Video-Bild- und/oder Audiodaten, die von der Digitalkamera empfangen wurden, enthält.

5. RFID-Leser nach Anspruch 1, wobei der Vergleich durch Verwendung eines Bildvergleichsalgorithmus ausgeführt wird.

6. RFID-System, enthaltend einen RFID-Leser (10, 31, 35, 42, 48, 58) nach Anspruch 1 und mindestens einen Server oder eine Datenbank (36, 50), der/die Daten von der mindestens einen Video-/Bild- und/oder Audiodatei enthält, die von dem RFID-Leser empfangbar ist.

7. RFID-System nach Anspruch 6, weiter enthaltend mindestens eine Digitalkamera (30, 38, 40), die angepasst ist, um Video-/Bildsignale an den RFID-Leser zu übertragen.

8. RFID-System nach Anspruch 6, weiter enthaltend mindestens einen Lautsprecher (52), der angepasst ist, um Audiosignale von dem RFID-Leser auszugeben.

9. RFID-System nach Anspruch 6, weiter enthaltend mindestens ein Mikrofon (56), das angepasst ist, um Audiosignale an den RFID-Leser zu übertragen.

10. RFID-System nach Anspruch 6, wobei der RFID-Leser mit dem Rest des Systems sowohl drahtlos als auch mit mindestens einem Draht verbunden ist.

11. RFID-System nach Anspruch 6, wobei der RFID-Leser angepasst ist, um mit einer Vielzahl von Zugangspunkten (20, 22) verbunden zu sein.

12. RFID-System nach Anspruch 6, wobei der RFID-Leser angepasst ist, um mit einer Vielzahl von Routern (16, 18) verbunden zu sein.

13. RFID-System nach Anspruch 6, wobei der RFID-Leser angepasst ist, um mit einer Vielzahl von Servern (24, 26, 36, 50, 60) verbunden zu sein.

14. Verfahren zum Operieren eines RFID-Systems, das mindestens einen RFID-Leser (10, 31, 35, 42, 48, 58), wie in Anspruch 1 definiert, enthält,
das Verfahren die folgenden Schritte enthaltend
(a) Erfassen von Daten von mindestens einem RFID-Tag;
(b) Erfassen von Video-/Bild- und/oder Audiodaten eines Objekts, das mindestens ein RFID-Tag trägt;
**gekennzeichnet durch** weiteres Enthalten der folgenden Schritte:
(c) Senden der Daten, die von dem mindestens einen RFID-Tag erfasst wurden, an eine Datenbank (36, 50);
(d) Erhalten, von der Datenbank, von im Voraus gespeicherten Video-/Bild-und/oder Audiodaten des Objekts, das das mindestens ein RFID-Tag trägt; und
(e) Vergleichen von Video-/Bild- und/oder Audiodaten des Objekts, die in dem Schritt (b) erfasst wurden, mit den Daten, die von der Datenbank in dem Schritt (d) erhalten wurden.

15. Verfahren nach Anspruch 14, wobei der Schritt (b) durch mindestens eine Digitalkamera (30, 38, 40) ausgeführt wird.

16. Verfahren nach Anspruch 14, wobei der Schritt (b) durch ein Mikrofon (56) ausgeführt wird.

17. Verfahren nach Anspruch 14, weiter enthaltend einen Schritt (f) zum Ausgeben der Audiodaten, die von der Datenbank in Schritt (d) erhalten wurden.

18. Verfahren nach Anspruch 17, wobei die Audiodaten durch mindestens einen Lautsprecher (52) ausgegeben werden.

19. Verfahren nach Anspruch 14, weiter enthaltend einen Schritt (g) zum Übertragen der Video-/Bild- und/oder Audiodaten des Objekts, die in dem Schritt (b) erfasst wurden, an einen persönlichen Monitor (44).

## Revendications

1. Lecteur d'identification RFID (10, 31, 35, 42, 48, 58) apte à recevoir des données en provenance d'au moins une étiquette d'identification RFID, dans lequel ledit lecteur d'identification RFID est apte à recevoir et/ou transmettre des données audio et/ou vidéo/d'image, ledit lecteur d'identification RFID comportant :
un moyen pour capturer des données à partir d'au moins une étiquette d'identification RFID ;
**caractérisé par** ;
un moyen pour transmettre lesdites données capturées à partir de ladite au moins une étiquette d'identification RFID à un serveur ou à une base de données (36, 50) en vue de l'identification d'au moins un fichier d'image/vidéo dans ledit serveur ou dans ladite base de données ;
un moyen pour recevoir des données en provenance dudit au moins un fichier d'image/vidéo dans ledit serveur ou ladite base de données ;
un moyen pour recevoir les données d'image/vidéo à partir d'un appareil photographique numérique (30, 38, 40) ; et
un moyen pour comparer lesdites données en provenance dudit au moins un fichier d'image/vidéo dans ledit serveur ou ladite base de données auxdites données d'image/vidéo reçues à partir dudit appareil photographique numérique.

2. Lecteur d'identification RFID selon la revendication 1, dans lequel ledit lecteur d'identification RFID est apte à recevoir des signaux audio en provenance d'un microphone (56).

3. Lecteur d'identification RFID selon la revendication 1, dans lequel ledit lecteur d'identification RFID est apte à transmettre des signaux audio via un haut-parleur (52).

4. Lecteur d'identification RFID selon la revendication 1, dans lequel ledit lecteur d'identification RFID comprend en outre un moyen pour comprimer lesdites données audio et/ou vidéo/d'image reçues à partir dudit appareil photographique numérique.

5. Lecteur d'identification RFID selon la revendication 1, dans lequel ladite comparaison est mise en oeuvre en faisant appel à un algorithme de comparaison d'images.

6. Système d'identification RFID comportant un lecteur d'identification RFID (10, 31, 35, 42, 48, 58) selon la revendication 1, et au moins un serveur ou une base de données (36, 50) contenant des données dudit au moins un fichier audio et/ou vidéo/d'image pouvant être reçues par ledit lecteur d'identification RFID.

7. Système d'identification RFID selon la revendication 6, comportant en outre au moins un appareil photographique numérique (30, 38, 40) apte à transmettre des signaux vidéo/d'image audit lecteur d'identification RFID.

8. Système d'identification RFID selon la revendication 6, comportant en outre au moins un haut-parleur (52) apte à générer en sortie des signaux audio en provenance dudit lecteur d'identification RFID.

9. Système d'identification RFID selon la revendication 6, comportant en outre au moins un microphone (56) apte à transmettre des signaux audio audit lecteur d'identification RFID.

10. Système d'identification RFID selon la revendication 6, dans lequel ledit lecteur d'identification RFID est connecté au reste du système à la fois sans fil et en faisant appel à au moins un fil.

11. Système d'identification RFID selon la revendication 6, dans lequel ledit lecteur d'identification RFID est apte à être connecté à une pluralité de points d'accès (20, 22).

12. Système d'identification RFID selon la revendication 6, dans lequel ledit lecteur d'identification RFID est apte à être connecté à une pluralité de routeurs (16, 18).

13. Système d'identification RFID selon la revendication 6, dans lequel ledit lecteur d'identification RFID est apte à être connecté à une pluralité de serveurs (24, 26, 36, 50, 60).

14. Procédé destiné à exploiter un système d'identification RFID comportant au moins un lecteur d'identification RFID (10, 31, 35, 42, 48, 58) selon la revendication 1,
ledit procédé comportant les étapes ci-dessous consistant à :
(a) capturer des données d'au moins une étiquette d'identification RFID ;
(b) capturer des données audio et/ou vidéo/d'image d'un objet transportant ladite au moins une étiquette d'identification RFID ;
**caractérisé en ce qu'**il comporte outre les étapes ci-dessous consistant à :
(c) envoyer lesdites données capturées à partir de ladite au moins une étiquette d'identification RFID à une base de données (36, 50) ;
(d) obtenir, de ladite base de données, des données audio et/ou vidéo/d'image pré-stockées dudit objet transportant ladite au moins une étiquette d'identification RFID ; et
(e) comparer les données audio et/ou vidéo/d'image dudit objet capturées au cours de ladite étape (b) auxdites données obtenues à partir ladite base de données au cours de ladite étape (d).

15. Procédé selon la revendication 14, dans lequel ladite étape (b) est mise en oeuvre par au moins un appareil photographique numérique (30, 38, 40).

16. Procédé selon la revendication 14, dans lequel ladite étape (b) est mise en oeuvre par un microphone (56).

17. Procédé selon la revendication 14, comportant en outre une étape (f) consistant à générer en sortie lesdites données audio obtenues à partir de ladite base de données au cours de l'étape (d).

18. Procédé selon la revendication 17, dans lequel lesdites données audio sont émises par au moins un haut-parleur (52).

19. Procédé selon la revendication 14, comportant en outre une étape (g) consistant à transmettre lesdites données audio et/ou vidéo/d'image dudit objet capturées au cours de ladite étape (b) à un moniteur informatique personnel (44).
